(19) Europäisches Patentamt
European Patent Office
Office européen des brevets

(11) **EP 4 641 654 A1**

(12) **EUROPEAN PATENT APPLICATION**

(43) Date of publication:
**29.10.2025 Bulletin 2025/44**

(21) Application number: **25169149.9**

(22) Date of filing: **08.04.2025**

(51) International Patent Classification (IPC):
*H01M 4/131* (2010.01)   *H01M 4/136* (2010.01)
*H01M 4/36* (2006.01)   *H01M 4/505* (2010.01)
*H01M 4/525* (2010.01)   *H01M 4/58* (2010.01)
*C01G 49/00* (2006.01)   *C01G 53/42* (2025.01)
*C01G 45/1242* (2025.01)   *H01M 4/04* (2006.01)

(52) Cooperative Patent Classification (CPC):
**H01M 4/5825; H01M 4/364; H01M 4/366;
H01M 4/505; H01M 4/525;** C01G 45/1242;
C01G 49/009; C01G 53/42; H01M 4/0447

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.04.2024 KR 20240054517**

(71) Applicant: **SAMSUNG SDI CO., LTD.
Yongin-si, Gyeonggi-do 17084 (KR)**

(72) Inventors:
• **KIM, Young-Ki
17084 Yongin-si (KR)**
• **CHOI, Aram
17084 Yongin-si (KR)**
• **KIM, Sangmi
17084 Yongin-si (KR)**
• **DOO, Sungwook
17084 Yongin-si (KR)**
• **KANG, Gwiwoon
17084 Yongin-si (KR)**
• **LEE, Soonrewl
17084 Yongin-si (KR)**

(74) Representative: **Marks & Clerk LLP
15 Fetter Lane
London EC4A 1BW (GB)**

(54) **POSITIVE ELECTRODE ACTIVE MATERIAL FOR RECHARGEABLE LITHIUM BATTERY, POSITIVE ELECTRODE INCLUDING THE SAME AND RECHARGEABLE LITHIUM BATTERY INCLUDING THE SAME**

(57) A positive electrode active material includes first particles including a compound represented by Chemical Formula 1 having an olivine structure, second particles including a compound represented by Chemical Formula 2 having a spinel structure, and third particles including a compound of Chemical Formula 3 having a layered structure. The first particles and the second particles constitute a main active material of the positive electrode active material, and a content of the main active material is about 95 parts by weight to about 99.5 parts by weight based on about 100 parts by weight of the positive electrode active material. Also disclosed are positive electrodes including the positive electrode active materials, and rechargeable lithium batteries including the same.

FIG. 7

**Description**

**BACKGROUND**

The present invention relates to a positive electrode active material for a rechargeable lithium battery, a positive electrode including the positive electrode active material and a rechargeable lithium battery including the positive electrode. More particularly, the present invention relates to a positive electrode active material including an olivine-based lithium compound, a positive electrode including the positive electrode active material and a rechargeable lithium battery including the positive electrode.

Recently, the proliferation of electronic devices that use batteries (such as mobile phones and/or laptop computers), and/or electric vehicles has led to a significant increase in the demand for batteries, such as rechargeable batteries with relatively high energy density and high capacity. Accordingly, there is active research and development aimed at enhancing (improving) the performance of rechargeable batteries, such as rechargeable lithium batteries.

A rechargeable lithium battery is a battery including a positive electrode and a negative electrode, both including active materials capable of intercalation and deintercalation of lithium ions, as well as an electrolyte. Electrical energy is generated (produced) through the oxidation and reduction reactions when lithium ions are intercalated into and deintercalated from the positive and negative electrodes.

**SUMMARY**

The present invention provides a positive electrode active material that is economical with high energy density and enhanced (excellent or suitable) lifetime characteristics.

The present invention also provides a rechargeable lithium battery that is economical with high energy density and enhanced (excellent or suitable) lifetime characteristics.

Additional aspects will be set forth in part in the description which follows and, in part, will be apparent from the description, or may be learned by practice of the presented embodiments of the disclosure.

According to a first aspect of the present invention there is provided a positive electrode active material including first particles including a compound of Chemical Formula 1 and having an olivine structure, second particles including a compound of Chemical Formula 2 and having a spinel structure, and third particles including a compound of Chemical Formula 3 and having a layered structure. The first particles and the second particles constitute a main active material. The content (e.g., amount) of the main active material is about 95 parts by weight to about 99.5 parts by weight on the basis of about 100 parts by weight of the positive electrode active material, and the content (e.g., amount) of the third particles is about 0.5 parts by weight to about 5 parts by weight on the basis of about 100 parts by weight of the positive electrode active material.

$$\text{Chemical Formula 1} \qquad \text{Li}_{a1}\text{Fe}_{x1}\text{B}_{y1}\text{PO}_{4-b1}$$

In Chemical Formula 1, $0.8 \leq a1 \leq 1.2$, $0.95 \leq x1 \leq 1.0$, $0 \leq y1 \leq 0.05$ (e.g., $0.001 \leq y1 \leq 0.05$), $0 \leq b1 \leq 0.05$, $x1 + y1 = 1$, and B is at least one element selected from among the group including (e.g., selected from the group consisting of) Al, Ti, V and Mg.

$$\text{Chemical Formula 2} \qquad \text{Li}_{a2}\text{Mnx}_2\text{Cy}_2\text{O}_{4-b2}$$

In Chemical Formula 2, $0.8 \leq a2 \leq 1.2$, $1.9 \leq x2 \leq 2.05$, $0 \leq y2 \leq 0.05$ (e.g., $0.001 \leq y2 \leq 0.05$), $0 \leq b2 \leq 0.05$, and C is at least one element selected from among the group including (e.g., selected from the group consisting of) Al and Mg.

$$\text{Chemical Formula 3} \qquad \text{Li}_{a3}\text{Ni}_{x3}\text{D}_{y3}\text{O}_{2-b3}$$

In Chemical Formula 3, $1.9 < a3 \leq 2.1$, $0.9 \leq x3 \leq 1.05$, $0 \leq y3 \leq 0.05$, $0 \leq b3 \leq 0.05$, and D is at least one element selected from among the group including (e.g., selected from the group consisting of) Al and Mg.

According to a second aspect of the present invention there is provided a positive electrode for a rechargeable lithium battery that includes a positive electrode current collector, and a positive electrode active material layer on the positive electrode current collector. The positive electrode active material layer includes the positive electrode active material, a conductive material, and a binder.

According to a third aspect of the present invention there is provided a rechargeable lithium battery that includes the positive electrode active material.

At least some of the above and other features of the invention are set out in the claims.

## BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure.

FIG. 1 illustrates a simplified conceptual diagram showing a rechargeable lithium battery according to one or more embodiments of the present disclosure.

FIGS. 2-5 are schematic views each showing rechargeable lithium batteries according to one or more embodiments, where FIG. 2 is a cylindrical battery, FIG. 3 is a prismatic battery, and FIGS. 4 and 5 are pouch-type (kind) batteries.

FIGS. 6 and 7 illustrate enlarged views showing positive electrode active material layers of a rechargeable lithium battery according to one or more embodiments of the present disclosure.

FIG. 8A illustrates a pair of scanning electron microscope (SEM) images showing a positive electrode active material of Preparation Example 1-1 of the present disclosure.

FIG. 8B illustrates a pair of SEM images showing a positive electrode active material of Preparation Example 1-2 of the present disclosure.

FIG. 9 illustrates a pair of SEM images showing a positive electrode active material of Preparation Example 1-3 of the present disclosure.

FIG. 10 illustrates a pair of SEM images showing a positive electrode active material of Preparation Example 1-4 of the present disclosure.

## DETAILED DESCRIPTION

Hereinafter, embodiments of the present disclosure will be described clearly and in more detail to such an extent that those skilled in the art easily implement the present disclosure. In order to sufficiently understand the configuration and effect of the present invention, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to disclose the present disclosure and let those skilled in the art fully know the scope of the present disclosure.

In this description, it will be understood that, if (e.g., when) an element is referred to as being on another element, the element or component may be directly on the other element, or intervening elements may be present between therebetween. In contrast, if (e.g., when) an element is referred to as being "directly on" another element, there are no intervening elements present. In the drawings, thicknesses of some components are exaggerated for effectively explaining the technical contents. Like reference numerals refer to like elements throughout, and duplicative descriptions thereof may not be provided the specification.

Unless otherwise specially noted in this description, the expression of singular form (e.g., "a," "an," and/or "the") may include the expression of plural form, including "at least one," unless the context clearly dictates otherwise. In some embodiments, unless otherwise specially noted, the phrase "A or B" may indicate "A but not B", "B but not A", and "A and B". The terms "comprises," "includes," "comprising," "including," "comprise," "include," "having," "has," and/or "have," as used in this description, are intended to designate the presence of an embodied aspect, number, step (e.g., act or task), element, and/or a (e.g., any suitable) combination thereof do not preclude or exclude the presence or addition of one or more other features, numbers, steps (e.g., acts or tasks), elements, components, and/or a (e.g., any suitable) combination thereof.

As utilized herein, the term "combination thereof" may refer to a mixture, a stack, a composite, a copolymer, an alloy, a blend, or a reaction product.

In one or more embodiments, the term "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" indicates that any additional components will not materially affect the chemical, physical, optical or electrical properties of the semiconductor film.

Further, in this specification, the phrase "on a plane," or "plan view," indicates viewing a target portion from the top, and the phrase "on a cross-section" indicates viewing a cross-section formed by vertically cutting a target portion from the side.

The term "particle diameter", "particle size", and/or the like as utilized herein refers to an average diameter of particles if (e.g., when) the particles are spherical, and refers to an average major axis length of particles if (e.g., when) the particles are non-spherical. For example, a particle diameter may be an average particle diameter. In some embodiments, a particle diameter indicates an average particle diameter ($D_{50}$) where a cumulative volume is about 50 volume % in a particle size distribution. The average particle diameter ($D_{50}$) may be measured by a method widely suitable to those skilled in the art, for example, by a particle size analyzer, a transmission electron microscope (TEM) image, or a scanning electron microscope (SEM) image. In one or more embodiments, a dynamic light-scattering measurement device is utilized to perform a data analysis, the number of particles is counted for each particle size range, and then from this, the average particle diameter ($D_{50}$) value may be obtained through a calculation. Dissimilarly, a laser scattering method may be utilized to measure the average particle diameter ($D_{50}$). In the laser scattering method, a target particle is distributed in a distribution solvent, introduced into a laser scattering particle-diameter measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

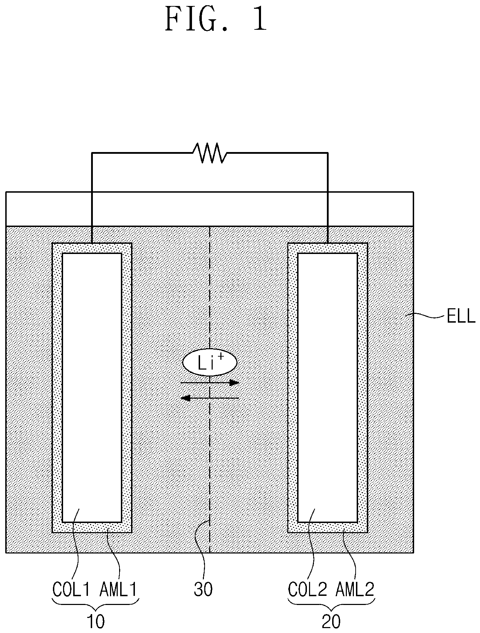

FIG. 1 is a cross-sectional view of a rechargeable lithium battery, according to one or more embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other by the separator 30. The separator 30 may be arranged between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

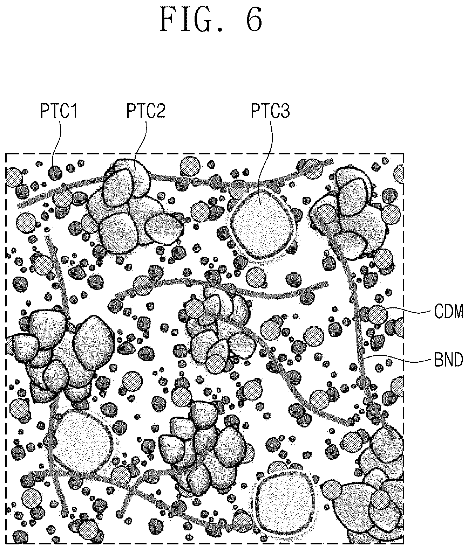

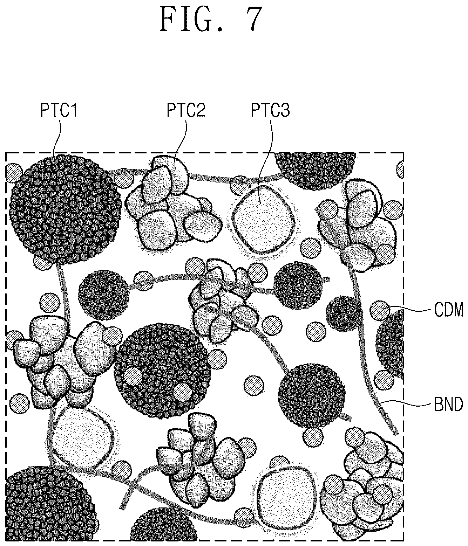

The positive electrode 10 for a rechargeable lithium battery may include a current collector COL1 and a positive electrode active material layer AML1 formed on the current collector COL1. The positive electrode active material layer AML1 may include a positive electrode active material and may further include a binder and/or a conductive material. The positive electrode active material layer AML1 according to one or more embodiments of the present disclosure is described in more detail with reference to FIGS. 6 and 7. Al may be utilized for the current collector COL1, but the present disclosure is not limited thereto.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material, based on a total weight (100 wt%) of the negative electrode active material layer AML2.

The binder may serve to attach the negative electrode active material particles well to each other and also to attach the negative electrode active material well to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resins, polyvinyl alcohol, and/or a (e.g., any suitable) combination thereof.

If (e.g., when) an aqueous binder is utilized as the negative electrode binder, a cellulose-based compound capable of imparting viscosity may be further included. The cellulose-based compound may include at least one of carboxymethyl cellulose, hydroxypropylmethyl cellulose, methyl cellulose, and/or an alkali metal salt thereof. The alkali metal may include sodium (Na), potassium (K), or lithium (Li).

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be utilized to impart conductivity (e.g., electrical conductivity) to the electrode. Any material that does not cause chemical change (e.g., does not cause an undesirable chemical change in the rechargeable lithium battery) and that conducts electrons may be utilized in the rechargeable lithium battery. Non-limiting examples thereof may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, and/or the like in a form of a metal powder and/or a metal fiber; a conductive polymer such as a polyphenylene derivative; and/or a (e.g., any suitable) mixture thereof.

The negative current collector COL2 may include a copper foil, a nickel foil, a stainless steel foil, a titanium foil, a nickel foam, a copper foam, a polymer substrate coated with a conductive metal, and/or a (e.g., any suitable) combination thereof.

## Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous carbon and/or a (e.g., any suitable) combination thereof. The crystalline carbon may be at least one of graphite such as non-shaped, sheet-shaped, flake-shaped, sphere-shaped, or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and/or a metal selected from among Na, K, rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material and/or a Sn-based negative electrode active material. The Si-based negative electrode active material may include silicon, a silicon-carbon composite, $SiO_x$ (where $0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SiO_x$ (where $0 < x \leq 2$), a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled (e.g., the primary silicon particles are assembled (agglomerated) to form the secondary particle as a core), and an amorphous carbon coating layer (shell) on the surface of the secondary particle (e.g., the secondary particle is coated with the amorphous carbon coating layer). The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and/or silicon particles and an amorphous carbon coating layer on a surface of the core.

The Si-based negative electrode active material and/or the Sn-based negative electrode active material may be utilized in combination with a carbon-based negative electrode active material.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers of polyethylene, polypropylene, and/or polyvinylidene fluoride, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on one or both surfaces (e.g., opposite surfaces) of the porous substrate.

The porous substrate may be a polymer film formed of one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON®), or a copolymer or mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and/or a lithium salt.

The non-aqueous organic solvent may serve as a medium for transmitting ions taking part in the electrochemical reaction of a rechargeable lithium battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (where R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be utilized alone or in combination of two or more.

In some embodiments, if (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

The lithium salt dissolved in the organic solvent supplies lithium ions in the rechargeable lithium battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and/or lithium bis(oxalato)borate (LiBOB).

## Rechargeable Lithium Battery

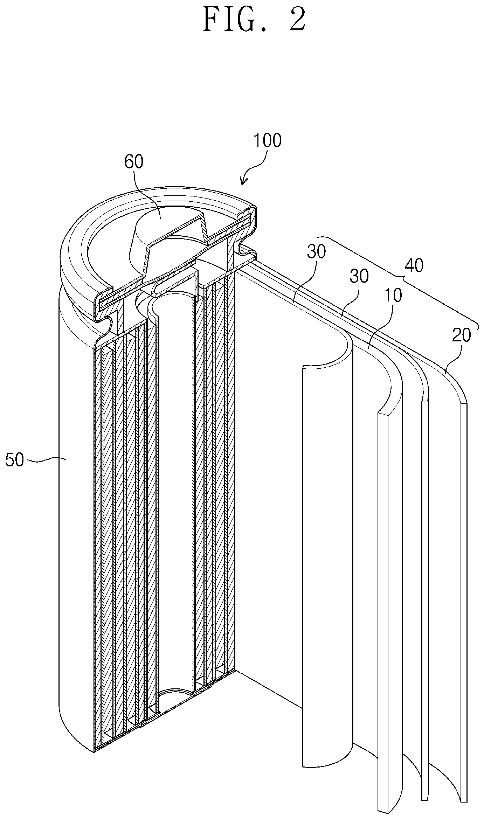

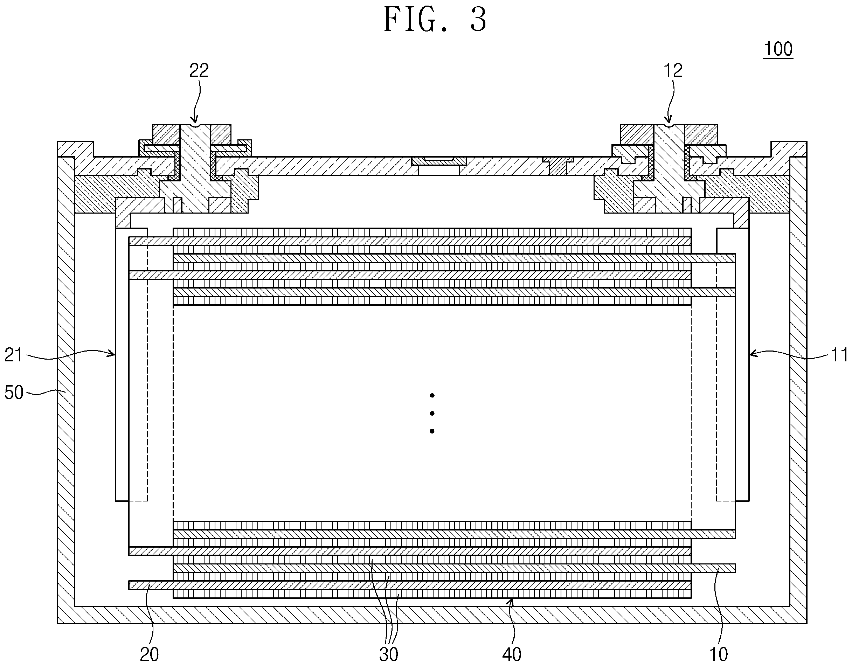

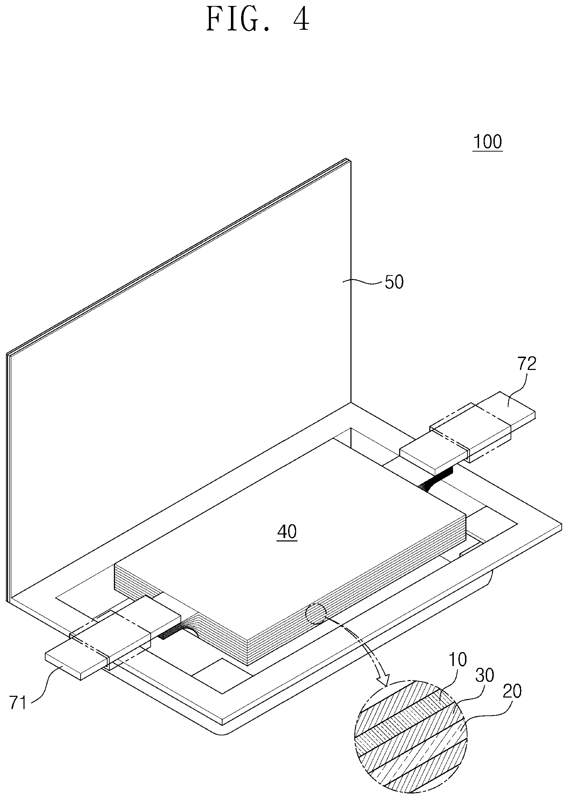

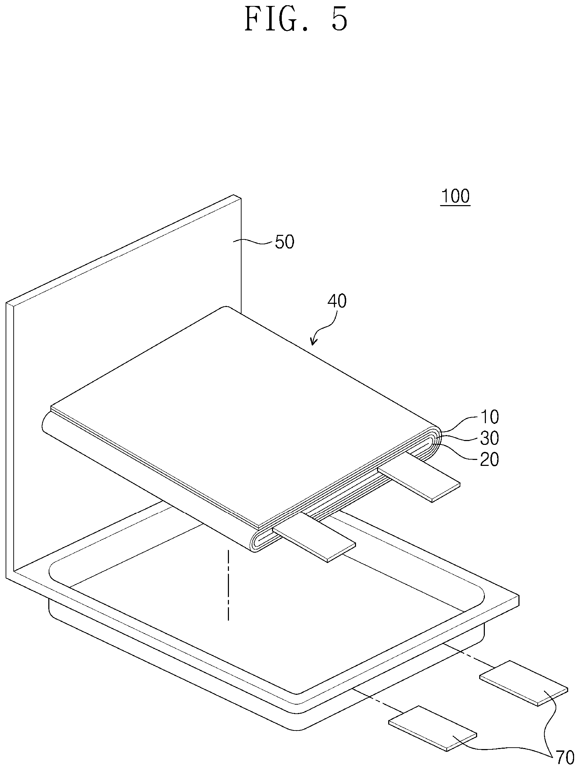

The rechargeable lithium battery may be classified into cylindrical, prismatic, pouch, or coin-type (kind) batteries, and/or the like depending on their shape. FIGS. 2 to 5 are schematic views each illustrating a rechargeable lithium battery according to one or more embodiments. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in each of FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

## Positive Electrode Active Material Layer AML1

FIGS. 6 and 7 each illustrates an enlarged view of a positive electrode active material layer AML of a rechargeable lithium battery, according to one or more embodiments of the present disclosure. Referring to FIGS. 6 and 7, as discussed herein, a positive electrode active material layer AML1 (see FIG. 1) includes a first particle PTC1, a second particle PTC2, a third particle PTC3, a conductive material CDM, and a binder BND. A plurality of the first particles PTC1, a plurality of the second particles PTC2 and a plurality of the third particles PTC3 constitute a positive electrode active material according to the present invention.

The positive electrode active material layer AML1 may further include an additive that may be served as a sacrificial positive electrode.

The content (e.g., amount) of the positive electrode active material (e.g., the plurality of first particles PTC1, the plurality of second particles PTC2, and the plurality of third particles PTC3) in the positive electrode active material layer AML1 is about 90 wt% to about 99.5 wt%, or about 90 wt% to about 99 wt%, relative to (e.g., based on) about a total weight (100 wt%) of the positive electrode active material layer AML1. Each of the contents of the binder BND and the conductive material CDM may be about 0.25 wt% to about 5 wt%, or about 0.5 wt% to about 5 wt%, relative to (e.g., based on) about the total weight (100 wt%) of the positive electrode active material layer AML1.

The binder BND may combine the plurality of first particles PTC1, the plurality of second particles PTC2, the plurality of third particles PTC3, and the conductive material CDM with each other. For example, the binder BND may include at least one selected from among the group including (e.g., selected from the group consisting of) polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-including polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present disclosure is not limited thereto.

The conductive material CDM may be utilized to improve the conductivity of the positive electrode active material layer AML1. Any conductive material that does not cause a chemical change of the positive electrode active material layer AML1 may be utilized without limitation as the conductive material CDM. For example, the conductive material CDM may include: a carbon-based material such as natural graphite, artificial graphite, carbon black, acetylene black, Ketjen black, carbon fiber, carbon nano-fiber, and/or carbon nano-tube; a metal-based material including copper, nickel, aluminium, silver and/or the like and having a metal powder and/or metal fiber form; a conductive polymer such as a polyphenylene derivative; and/or a (e.g., any suitable) mixture thereof.

Hereinafter, each of the first particle PTC1, the second particle PTC2, and the third particle PTC3 will be explained in more detail.

**First Particle PTC1**

The first particle PTC1 includes a lithium compound with an olivine structure, represented by Chemical Formula 1.

$$\text{Chemical Formula 1} \qquad Li_{a1}Fe_{x1}B_{y1}PO_{4-b1}$$

In Chemical Formula 1, $0.8 \leq a1 \leq 1.2$, $0.95 \leq x1 \leq 1.0$, $0 \leq y1 \leq 0.05$ (e.g., $0.001 \leq y1 \leq 0.05$), $0 \leq b1 \leq 0.05$, $x1 + y1 = 1$, and B is at least one element selected from among the group including (e.g., selected from the group consisting of) Al, titanium (Ti), vanadium (V) and/or Mg. B is a dopant doped in the first particle PTC1.

The dopant may have the effect of controlling the first primary particles of the first particle PTC1 to grow uniformly (e.g., substantially uniformly), thereby improving the charge and discharge efficiency, low-temperature properties and lifetime characteristics of a rechargeable lithium battery.

The first particle PTC1 has advantages in having high economic feasibility, high structural stability and excellent or suitable lifetime characteristics. Because Fe is included as a main component, the first particle PTC1 is relatively inexpensive, and because the first particle PTC1 is structurally stable, chemical changes may be relatively little even though subjected to repeated charging and discharging.

In one or more embodiments, the first particle PTC1 may include a coating layer on the surface of the first particle PTC1. The coating layer may cover the entire surface of the first particle PTC1 or may cover a portion of the surface of the first particle PTC1. For example, the coating layer may include carbon and/or a carbon-including compound. The first particle PTC1 may have improved structural stability and/or electrical conductivity due to the coating layer.

The coating layer may further include at least one selected from among the group including (e.g., selected from the group consisting of) an aluminium-including compound, a titanium-including compound, a magnesium-including compound and/or a vanadium-including compound. A metal-including compound, such as the aluminium-including compound, the titanium-including compound, the magnesium-including compound, and/or the vanadium-including compound, may be, for example, a metal oxide, a metal hydroxide, a metal carbonate, a synthesized compound thereof, and/or a (e.g., any suitable) mixture thereof. The metal-including compound may further include other metal and/or non-metal elements. For example, the metal-including compound may further include lithium.

The first particle PTC1 may further include carbon derived from the coating layer. The carbon content (e.g., an amount of carbon) in the first particle PTC1 may be about 0.5 wt% to about 10 wt%, about 1 wt% to about 3 wt%, or about 1.5 wt% to about 2.5 wt%, based on a total weight (100 wt%) of the first particle PTC1. The amount of carbon may be measured using Thermogravimetric Analysis (TGA), CHNS Elemental Analysis, or X-ray Photoelectron Spectroscopy (XPS). For example, the amount of carbon according to embodiments of the present invention may be determined using an Elementar Micro Cube elemental analyzer. An example method of operation and conditions are as follows. A sample of about 1 to 2 mg is weighed in a tin cup, placed in an automatic sampling tray and introduced into a combustion tube through a ball valve, and the combustion is carried out at a combustion temperature of about 1000 °C. Subsequently, reduction of the combustion gas using reduced copper is carried out to form carbon dioxide. Carbon dioxide is detected using a thermal conductivity detector (TCD). After detecting carbon dioxide ($CO_2$) using a TCD, the carbon content can be determined by converting the detected $CO_2$ amount into its corresponding carbon concentration. This conversion can be performed using a calibration curve established with standard reference materials of known carbon concentrations, ensuring an accurate correlation between detector response and carbon content. The carbon content may then be calculated using the following formula:

$$\text{Carbon Content}(\%) = \frac{\text{Mass of detected CO}_2 \times \text{Atomic weight of C}}{\text{Molecular weight of CO}_2 \times \text{Sample mass}} \times 100$$

The final carbon content can be expressed as a percentage of the total sample mass. If necessary, blank sample measurements can be used to correct for background signals, thereby improving accuracy.

The first particles PTC1 may have a single particle and/or secondary particle form. For example, the first particles PTC1 may be present only in a single particle form, only in a secondary particle form, and/or in a form in which single particles and secondary particles are mixed. Hereinafter, the first particle PTC1 of a single particle form is explained referring to FIG. 6, and the first particle PTC1 of a secondary particle form is explained referring to FIG. 7.

In one or more embodiments, referring to FIG. 6, the first particles PTC1 may have a single particle form. In the description, the single particle may refer to a sole particle that does not have a grain boundary inside. The single particle has a morphology phase, and may refer to a single particle, a monolith structure, a monolithic structure, and/or a non-agglomerated (e.g., non-aggregated) particle, in which the particles exist as an independent phase that are not agglomerated. For example, the single particle may be a single crystal, a solely separated form, and/or independently divided. In one or more embodiments, the single particle (e.g., first particle PTC1) may be a particle including several crystals. The single particle may be a solely separated form. In one or more embodiments, the single particle (e.g., the first particle PTC1) may be in the form of 2 to 100 single particles attached to each other.

If (e.g., when) the first particle PTC1 is a single particle (e.g., being in a single particle form), the first particle PTC1 may include at least one first primary particle. In one or more embodiments, the first particle PTC1 may have a spherical and/or elliptical shape, in which the first primary particles are agglomerated. In one or more embodiments, though the first primary particles agglomerate, the first particle PTC1 may not have a spherical shape but may have a random shape.

If (e.g., when) the first particles PTC1 are single particles, the first particles PTC1 may be provided in one or more suitable sizes. For example, the average particle diameter of the first particles PTC1 may be about 0.5 micrometer ($\mu$m) to about 2.5 $\mu$m, or about 1 $\mu$m. The minimum particle diameter of the first particles PTC1 (e.g., the size of the first primary particles) may be about 100 nanometers (nm) to about 500 nm, or about 200 nm to about 300 nm.

In one or more embodiments, the average particle diameter may be measured by a particle size analyzer. The average particle diameter may refer to the diameter of particles ($D_{50}$) at an accumulated volume of about 50 vol% in particle size distribution.

In one or more embodiments, the minimum particle diameter, e.g., the size of the first primary particles, may refer to a diameter measured by randomly selecting about 30 primary particles in an electron microscope image on the first particles PTC1.

If (e.g., when) the first particles PTC1 are single particles, the porosity of the first particles PTC1 may be less than about 30%. Here, porosity (n) may be defined as the pore volume (Vp) divided by the total volume (Vt) of particles, or

$$n = \frac{V_p}{V_t}$$

Porosity (n) may be measured by Mercury Intrusion Porosimetry (MIP), gas adsorption methods such as BET analysis, or a combination of helium pycnometry and bulk density measurement.

The span value ( $\frac{D_{90} - D_{10}}{D_{50}}$ ) of the first particles PTC1 (e.g., a width of particle size distribution of the first particles PTC1), analyzed by a particle size analyzer, may not deviate from a range from about 0.3 to about 0.75. The terms "$D_{10}$", "$D_{50}$", and "$D_{90}$", as used herein, are each an average particle diameter exhibited by a cumulative volume of about 10, 50, or 90 volume%, respectively, of the particles in a particle size distribution.

In one or more embodiments, referring to FIG. 7 again, the first particles PTC1 may have a secondary particle form (e.g., being in a secondary particle form). The secondary particle may have a polycrystal form and refers to a form in which at least two or more first primary particles are agglomerated. For example, one first particle PTC1 may include a plurality of first primary particles that are agglomerated with each other (e.g., an aggregation/agglomeration of the plurality of the first primary particles). The first particles PTC1 may have a spherical shape, an elliptical shape, and/or the like.

In one or more embodiments, if (e.g., when) the first particle PTC1 has a secondary particle form, the first particle PTC1 may further include a grain boundary coating layer on the surface of each of the first primary particles. The grain boundary coating layer may be present in (e.g., in the interior of) the first particle PTC1. The grain boundary coating layer may be formed along the interface between the first primary particles inside the first particle PTC1. For example, the grain boundary coating layer may refer to a material coated on the grain boundary in (e.g., in the interior of) the first particle PTC1. The grain boundary coating layer may include carbon and/or a carbon-including compound. The grain boundary coating layer may further include at least one selected from among the group including (e.g., selected from the group consisting of) an aluminium-including compound, a titanium-including compound, a magnesium-including compound, and/or a vanadium-including compound.

If (e.g., when) the first particle PTC1 is a secondary particle, the interior of the above-described first particle PTC1 may refer to the entire interior of the first particle PTC1 excluding the surface of the first particle PTC1. For example, the interior of the first particle PTC1 may refer to an entire interior from a depth of about 10 nm from the surface of the first particle PTC1, or a region from a depth of about 10 nm to a depth of about 2 $\mu$m from the surface of the first particle PTC1.

If (e.g., when) the first particle PTC1 is a secondary particle, because the first particle PTC1 may further include the grain boundary coating part, structural stability may be reinforced, and a substantially uniform coating layer may be formed on the surface of the first particle PTC1. In addition, if (e.g., when) the first particle PTC1 further includes the grain boundary coating part, the electrical conductivity of the first particle PTC1 may be further improved.

If (e.g., when) the first particle PTC1 is a secondary particle, the first particle PTC1 may further include carbon derived from the coating layer and/or grain boundary coating layer. The carbon element content (e.g., an amount of carbon) in the first particle PTC1 may be about 0.5 wt% to about 10 wt%, about 1 wt% to about 3 wt%, or about 1.5 wt% to about 2.5 wt%, based on a total weight (100 wt%) of the first particle PTC1. The amount of carbon may be measured as described above. If (e.g., when) the first particle PTC1 is a secondary particle, the carbon content (e.g., amount) may be greater than a case where the first particle PTC1 is a single particle.

If (e.g., when) the first particles PTC1 are secondary particles, the average particle diameter of the first particles PTC1 may be about 2 $\mu$m to about 15 $\mu$m, about 3 $\mu$m to about 10 $\mu$m, or about 3 $\mu$m to about 7 $\mu$m. For example, the average particle diameter of the first particles PTC1 may be about 5 $\mu$m. In one or more embodiments, the average particle diameter may be measured utilizing a particle size analyzer. The average particle diameter may refer to the diameter ($D_{50}$) of particles at an accumulated volume of about 50 vol% in particle size distribution.

If (e.g., when) the first particle PTC1 is a secondary particle, the average size of the first primary particles may be less than about 200 nm. For example, the average size of the first primary particles may be about 10 nm to about 200 nm, about 20 nm to about 200 nm, about 50 nm to about 200 nm, or about 100 nm to about 200 nm. In one or more embodiments, the average particle size of the first primary particles may refer to a diameter measured by randomly selecting about 30 primary particles in an electron microscope image on the positive electrode active material. The size of the first primary particles may be substantially uniform.

If (e.g., when) the first particles PTC1 have a secondary particle form, the size of the first primary particles may be smaller compared to a case where the first particles PTC1 are single particles. For example, the size of the first primary particles in the case where the first particles PTC1 have a secondary particle form may be smaller by about 100 nm than the size of the first primary particles in the case where the first particles PTC1 have a single crystal form.

If (e.g., when) the first particles PTC1 are secondary particles, the average particle diameter of the first particles PTC1 and the average size of the first primary particles satisfy the above-described ranges, and if (e.g., when) the size of the first primary particles is substantially uniform, the charge and discharge capacity and the capacity at low temperature of a rechargeable lithium battery including the same may be improved.

If (e.g., when) the first particles PTC1 are secondary particles, the porosity of the first particles PTC1 may be about 20% to about 40%. Here, porosity (n) may be defined as the pore volume (Vp) divided by the total volume (Vt) of particles, or

$$n = \frac{V_p}{V_t}$$

Porosity (n) may be measured by Mercury Intrusion Porosimetry (MIP), gas adsorption methods such as BET analysis, or a combination of helium pycnometry and bulk density measurement

The span value ( $\frac{D_{90} - D_{10}}{D_{50}}$ ) of the first particles PTC1 (e.g., a width of particle size distribution of the first particles PTC1), analyzed by a particle size analyzer, may be about 0.3 to about 0.75.

If (e.g., when) the first particles PTC1 are secondary particles, the positive electrode active material layer AML1 (see FIG. 1) may be smoothly attached to a current collector COL1 (see FIG. 1) with a relatively small amount of a binder BND. For example, the content (e.g., amount) of the binder BND may be about 0.25 wt% to about 5 wt%, or about 0.5 wt% to about 5 wt%, or about 0.5 wt% to about 3 wt%, on the basis of about the total weight (100 wt%) of the positive electrode active material layer AML1. This may be due to an increase in the interaction between the first particles PTC1 and the current collector COL1 (see FIG. 1), because the average particle diameter of the first particles PTC1 is large. If (e.g., when) the content (e.g., amount) of the binder BND included in the positive electrode active material layer AML1 is reduced, the content (e.g., amount) of an active material (e.g., the positive electrode active material) may be increased accordingly, thereby achieving the effect of improving the capacity and energy density of a battery (e.g., the rechargeable lithium battery). In addition, by reducing the content (e.g., amount) of the binder that increases resistance, the effect of improving the electrical conductivity of a positive electrode may be achieved.

In the context of the present disclosure and unless otherwise defined, the first particle PTC1 may exist in two forms: single particles and secondary particles. Single particles are individual, non-agglomerated particles that may be single crystals or contain several crystals. They have a uniform structure without internal grain boundaries, which contributes to their high structural stability and minimal chemical changes during repeated charging and discharging. Single particles typically have a smaller average particle diameter and are provided in various sizes, enhancing the charge and discharge efficiency, low-temperature properties, and lifetime characteristics of the rechargeable lithium battery. On the other hand, secondary particles are agglomerations of multiple first primary particles, forming a polycrystal structure. These secondary particles may include a grain boundary (interface) coating layer, which improves structural stability and electrical conductivity. The average particle diameter of secondary particles is larger compared to single particles, and they may have a higher carbon content derived from the coating layer. The secondary particle form allows for a smoother attachment to the current collector with less binder, increasing the active material content and improving the battery's capacity and energy density. The porosity and particle size distribution of secondary particles also contribute to enhanced battery performance.

**Second Particle PTC2**

The second particle PTC2 includes a lithium compound with a spinel structure, represented by Chemical Formula 2.

$$\text{Chemical Formula 2} \qquad Li_{a2}Mnx_2Cy_2O_{4-b2}$$

In Chemical Formula 2, $0.8 \leq a2 \leq 1.2$, $1.9 \leq x2 \leq 2.05$, $0 \leq y2 \leq 0.05$ (e.g., $0.001 \leq y2 \leq 0.05$), $0 \leq b2 \leq 0.05$, and C is at least one element selected from among the group including (e.g., selected from the group consisting of) Al and Mg. C is a dopant doped in the second particle PTC2.

In one or more embodiments, in Chemical Formula 2, $0.8 < a2 \leq 1.2$, $1.95 \leq x2 \leq 2.05$, $0 \leq y2 \leq 0.05$, $0 \leq c2 \leq 0.05$, $2 \leq x2+y2 \leq 2.1$ may be satisfied. In one or more embodiments, in Chemical Formula 2, $0.8 < a2 \leq 1.2$, $1.95 \leq x2 \leq 2$, $0 \leq y2 \leq 0.05$, $0 \leq c2 \leq 0.05$, $x2 + y2 = 2$ may be satisfied.

The dopant may have the effect of controlling the second primary particles to grow uniformly (e.g., substantially uniformly), thereby improving the charge and discharge efficiency, low-temperature properties and lifetime characteristics of a rechargeable lithium battery.

The second particle (PTC2) has the advantages of high output properties, high average voltage and excellent or suitable structural stability. The second particle PTC2 has a spinel structure composed of the lattice structure of tetrahedral and octahedral. Because the lattice structure has one or more suitable passages, lithium ions may be smoothly intercalated/deintercalated, resulting in excellent or suitable output properties. The lattice structure may be more stable due to Mn in the second particle. Due to the structural stability, electrochemical properties of the particles may be maintained even at a high voltage, allowing the operation at a high voltage.

The second particle PTC2 is lithium manganese oxide and may be a positive electrode material in which cobalt is substituted with manganese in lithium cobalt oxide. In one or more embodiments of the present disclosure, the cobalt (Co) content (e.g., an amount of Co) of the second particle PTC2 may be very small that is substantially the same as being omitted. For example, the cobalt (Co) content (e.g., amount) of the second particle PTC2 may be about 100 ppm or less. Cobalt (Co) is substantially omitted in the positive electrode active material according to the present disclosure, and a rechargeable lithium battery that is economical and has high capacity and operating voltage, may be provided.

Referring to FIGS. 6 and 7 again, the second particle PTC2 may have a polycrystal form and may include a secondary particle in which at least two or more second primary particles are agglomerated. For example, one second particle PTC2 may include a plurality of second primary particles that are agglomerated with each other (e.g., an aggregation of the plurality of the second primary particles). The second particle PTC2 may have an agglomerated spherical shape of the second primary particles, and though the second primary particles agglomerate, the second particle PTC2 may have a random shape.

The average particle diameter of the second particles PTC2 may be about 3 $\mu$m to about 20 $\mu$m, about 4 $\mu$m to about 15 $\mu$m, or about 5 $\mu$m to about 10 $\mu$m. For example, the average particle diameter of the second particles PTC2 may be about 8 $\mu$m. In one or more embodiments, the average particle diameter may be measured by a particle size analyzer. The average particle diameter may refer to the diameter ($D_{50}$) of particles at an accumulated volume of about 50 vol% in particle size distribution.

The average size of the second primary particles constituting the second particles PTC2 may be about 3 $\mu$m or less. For example, the particle size of the second primary particles may be about 300 nm to about 3 $\mu$m, about 0.5 $\mu$m to about 3 $\mu$m, about 1 $\mu$m to about 3 $\mu$m, or about 2 $\mu$m to about 3 $\mu$m. In one or more embodiments, the average size of the second primary particles may refer to a diameter measured by randomly selecting about 30 primary particles in an electron microscope image on the positive electrode active material. The size of the second primary particles may be substantially uniform. The average size of the second primary particles may be greater than the average size of the first primary particles. The difference between the average size of the second primary particles and the average size of the first primary particles may be about 300 nm or more.

In one or more embodiments, the second particle PTC2 may include a second coating layer on the surface thereof. By including the second coating layer, the structural collapse of the second particle PTC2 due to repeated charging and discharging may be effectively suppressed or reduced.

The second coating layer may include an aluminium-including compound, a magnesium-including compound and/or a (e.g., any suitable) combination thereof. A metal-including compound in the second coating layer may be, for example, a metal oxide, a metal hydroxide, a metal carbonate, a synthesized compound thereof, and/or a (e.g., any suitable) mixture thereof. The metal-including compound may further include other metal and/or non-metal elements. For example, the second coating layer may further include lithium, manganese, and/or nickel.

A method for measuring the metal content (e.g., an amount of metal) in the second coating layer of the second particle PTC2 may include performing scanning electron microscopy-energy dispersive X-ray spectroscopy (SEM-EDS) on the second particles PTC2. Through the analysis, the aluminium and/or magnesium contents in the second coating layer may be confirmed. As a method for measuring the metal content (e.g., amount) in the second coating layer, an inductively coupled plasma-mass spectrometry (ICP-MS), an inductively coupled plasma optical emission spectroscopy (ICP-OES) and/or the like may be utilized in addition to the SEM-EDS.

### Third Particle PTC3

The third particle PTC3 includes a lithium compound represented by Chemical Formula 3.

$$\text{Chemical Formula 3} \qquad \text{Li}_{a3}\text{Ni}_{x3}\text{D}_{y3}\text{O}_{2-b3}$$

In Chemical Formula 3, $1.9 < a3 \leq 2.1$, $0.9 \leq x3 \leq 1.05$, $0 \leq y3 \leq 0.05$, $0 \leq b3 \leq 0.05$, and D is at least one element selected from among the group including (e.g., selected from the group consisting of) Al and/or Mg. The dopant may improve the surface stability and structural stability of the third particle PTC3.

In one or more embodiments, in Chemical Formula 3, $1.9 < a3 \leq 2.1$, $0.95 \leq x3 \leq 1$, $0 \leq y3 \leq 0.05$, $0 \leq b3 \leq 0.05$, and $x3 + y3 = 1$ may be satisfied.

The third particle PTC3 has advantages of high capacity energy density.

In one or more embodiments, referring to FIG. 6, the third particles PTC3 may have a single particle form. In the description, the single particle may refer to a sole particle that does not have a grain boundary inside. The single particle has a morphology phase, and may refer to a single particle, a monolith structure, a monolithic structure, and/or a non-agglomerated particle, in which the particles exist as an independent phase that are not agglomerated. For example, the single particle may be a single crystal. In one or more embodiments, the single particle (e.g., the third particles PTC3) may be a particle including several crystals. The single particle may be a solely separated form. In one or more embodiments, the single particle (e.g., the third particles PTC3) may be in the form of 2 to 100 single particles attached to each other.

If (e.g., when) the third particle PTC3 is a single particle (e.g., being in a single particle form), the third particle PTC3 may include at least one third primary particle. In one or more embodiments, the third particle PTC3 may have a spherical shape, an elliptical shape, and/or like, in which the third primary particles are attached. In one or more embodiments, though the third primary particles are attached, the third particle PTC3 may not have a spherical shape but may have a random shape.

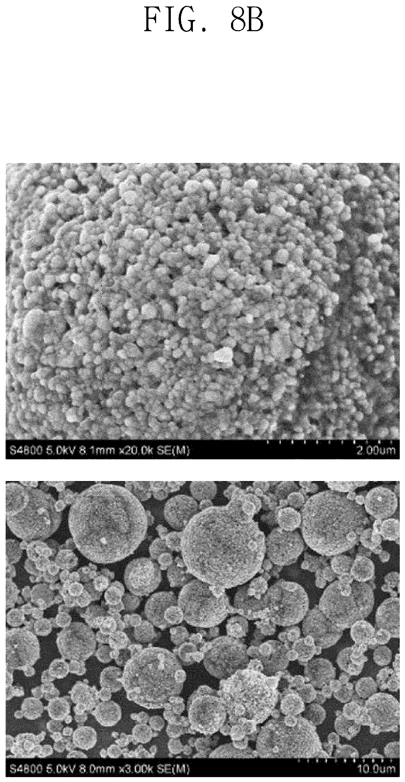

FIGS. 6 and 7 each illustrates the third particle PTC3 in a form including only one particle, but the third particle PTC3 may have a spherical shape, an elliptical shape, and/or a random shape. Referring to FIGS. 8B to 10, the shape of the third primary particles may be relatively more irregular than the agglomerated shape of the above-described first primary particles and the second primary particles.

If (e.g., when) the third particles PTC3 have (in the form of) single particles, the third particles PTC3 may be provided in one or more suitable sizes. For example, the average particle diameter of the third particles PTC3 may be about 2 μm to about 8 μm. The minimum particle diameter of the third particles PTC3, e.g., the size of the third primary particles, may be about 200 nm to about 500 nm. The average particle diameter of the third particles PTC3 may be greater than the average particle diameter of the above-described first particles PTC1. If (e.g., when) the third particle PTC3 includes a plurality of single particles, the average size of the third primary particles of the third particle PTC3 may be greater than the average size of the first primary particles.

In one or more embodiments, the third particle PTC3 may include a third coating layer on the surface of the third particle PTC3. The coating layer may serve the suppressing or reducing effect of the structural collapse of the third particle PTC3 according to repeated charging and discharging. Accordingly, the coating layer may improve the lifetime characteristics of a rechargeable lithium battery.

The third coating layer may include an aluminium-including compound, a magnesium-including compound, and/or a (e.g., any suitable) combination thereof. A metal-including compound in the third coating layer may be, for example, a metal oxide, a metal hydroxide, a metal carbonate, a synthesized compound thereof, and/or a (e.g., any suitable) mixture thereof. The metal-including compound may further include other metal and/or non-metal elements. For example, the third coating layer may further include lithium, manganese, and/or nickel.

Li derived from the third particle PTC3 may be utilized as irreversible Li, which moves to a negative electrode during initial charging but does not return to a positive electrode during discharging. For example, the third particle PTC3 may play the role of a sacrificial positive electrode. In one or more embodiments, the third particle PTC3 may play the role of supplying Li in a formation process, which is the first charge and discharge stage, and may not participate in a subsequent charge and discharge process. In other words, the third particle PTC3 may be electrochemically inactive after a first cycle of charging and discharging.

The third particles PTC3 may participate in forming a solid electrolyte interface (SEI) film on the surface of a negative electrode in a formation process. Li derived from the third particle PTC3 may be converted to irreversible Li, which no longer participates in a charge and discharge reaction.

The third particle PTC3 has properties of high capacity and energy density, and the amount of irreversible Li supplied during initial charging and discharging may be sufficient. The third particle PTC3 sacrifices, so that Li derived from the main active material, which is explained elsewhere herein, is not bound to irreversible Li, and the capacity of the main active material, which is explained elsewhere herein, may be realized as much as an initially designed amount, and ultimately, the increasing effect of the capacity and energy density of a battery (e.g., the rechargeable lithium battery) may be shown. The positive electrode active material according to the present disclosure includes an appropriate or suitable amount of the third particles PTC3, and the capacity and energy density of a rechargeable lithium battery may be increased.

The third particle PTC3 according to one or more embodiments of the present disclosure may include $Li_2NiO_2$. $Li_2NiO_2$ may provide lots of Li atoms in a formation process (e.g., a sufficient amount of Li atoms for reaction), and more irreversible Li may be provided. Accordingly, the effect as the sacrificial positive electrode may be obtained to a greater extent. For example, $Li_2NiO_2$ may be decomposed at between about 3.0 V to about 4.0 V to provide two Li atoms. $Li_2NiO_2$ is only an illustration, and the present disclosure is not limited thereto.

If (e.g., when) the content (e.g., amount) of the third particles PTC3 included in the positive electrode active material is within a specific content (e.g., amount) range, the third particles PTC3 may play the role in compensating for irreversible Li without affecting battery properties targeted if (e.g., when) designing the main active material, which is explained elsewhere herein. The content (e.g., amount) range of the third particles PTC3 is explained elsewhere herein.

In other words, the third particle PTC3 is a lithium compound with a specific chemical formula that includes elements like Al and Mg to enhance surface and structural stability. These particles are designed to have high capacity and energy density. The third particle PTC3 typically exists in a single particle form, meaning it does not have internal grain boundaries and can be a single crystal or a collection of several crystals. These single particles can vary in size, with an average particle diameter ranging from 2 $\mu$m to 8 $\mu$m, and they may include a coating layer to prevent structural collapse during repeated charging and discharging, thereby improving the battery's lifetime characteristics.

Additionally, the third particle PTC3 can act as a sacrificial positive electrode, providing irreversible lithium during the initial charge and discharge cycles, which helps form a solid electrolyte interface (SEI) on the negative electrode. This process ensures that the lithium from the main active material is not bound to irreversible lithium, thereby maximizing the battery's capacity and energy density. The third particle PTC3 may include compounds like $Li_2NiO_2$, which decompose to provide lithium atoms, further enhancing its role as a sacrificial electrode. The inclusion of these particles in the positive electrode active material can significantly improve the overall performance of a rechargeable lithium battery.

**Main Active Material**

Referring to FIGS. 6 and 7, the main active material according to one or more embodiments of the present disclosure is explained in more detail elsewhere herein.

The first particles PTC1 and the second particles PTC2 constitute the main material (major components). On the basis of about 100 parts by weight of the positive electrode active material, the content (e.g., amount) of the main active material is about 95 parts by weight to about 99.5 parts by weight.

A lithium iron phosphate-based positive electrode active material (first particle PTC1) with an olivine crystal structure may have advantages of being relatively cheap and having a stable structure and excellent or suitable lifetime characteristics compared to other positive electrode materials. A lithium manganese oxide-based positive electrode active material (second particle PTC2) with a spinel structure may have advantages of having a high average voltage. Because the first particles PTC1 and the second particles PTC2 are mixed and utilized as the main active material in the positive electrode active material according to the present disclosure, both (e.g., simultaneously) advantages of the first particles PTC1 and the second particles PTC2 may be obtained. For example, properties of inexpensive and excellent or suitable in lifetime characteristics, and at the same time, being operated at a high operating voltage may be achieved.

The mixing ratio of the first particles PTC1 and the second particles PTC2 may be about 40:60 to about 90:10, or about 55:45 to about 37:63, or about 46:54 to about 37:63, based on the weight. The Mn content (e.g., amount) relative to transition metals excluding lithium in the main active material that includes (e.g., is composed of) the first particles PTC1 and the second particles PTC2, may be about 40 mol% to about 75 mol%, or about 50 mol% to about 70 mol%, based on a total mole (100 mol%) of the transition metals excluding lithium in the main active material. The Mn content (e.g., amount) may be similar to the manganese content (e.g., amount) of a common lithium manganese iron phosphate positive electrode active material (hereinafter, referred to as LMFP).

By appropriately or suitably mixing the first particles PTC1 and the second particles PTC2 so as to satisfy the manganese content (e.g., amount) range, the positive electrode active material according to the present disclosure may be easy to manufacture and process, while exhibiting electrochemically similar properties to the LMFP. Because the LMFP operates at a high average voltage, it may be an alternative to improve the defect of a low average voltage of the lithium iron phosphate-based positive electrode active material (hereinafter, referred to as LFP). However, the LMFP may have limitations in that it is difficult to manufacture and process if (e.g., when) applied to actual processes. The positive electrode active material according to the present disclosure may be easily manufactured and processed while exhibiting properties similar to the LMFP by controlling the Mn content (e.g., amount) of the main active material utilizing the second particles PTC2.

## Positive Electrode Active Material

Referring to FIGS. 6 and 7, the positive electrode active material according to one or more embodiments of the present disclosure is explained in more detail elsewhere herein.

The positive electrode active material according to the present disclosure includes the first particles PTC1, the second particles PTC2, and the third particles PTC3.

The above-described first particles PTC1 and second particles PTC2 have defects of having relatively low energy density compared to other positive electrode materials. The positive electrode active material according to the disclosure may have high capacity and energy density by further including the third particles PTC3 that may function as a sacrificial positive electrode, in addition to the first particles PTC1 and the second particles PTC2.

The content (e.g., amount) of the third particles PTC3 is about 0.5 parts by weight to about 5 parts by weight, or about 2 parts by weight to about 3 parts by weight, on the basis of about 100 parts by weight of the positive electrode active material. If (e.g., when) the content (e.g., amount) of the third particles PTC3 satisfies the above range, a role in compensating for irreversible Li may be achieved without affecting the desired or suitable battery properties if (e.g., when) designing the main active material. For example, if (e.g., when) the content (e.g., amount) of the third particles PTC3 satisfies the above range, capacity and energy density properties may be improved while minimizing or reducing the decrease in lifetime and stability of the positive electrode active material.

The content (e.g., amount) of the third particles PTC3 in the positive electrode active material may be determined in a range where the charge and discharge efficiency of a positive electrode does not fall lower than (e.g., below) the charge and discharge efficiency of a negative electrode. If (e.g., when) the charge and discharge efficiency of the positive electrode is higher than the charge and discharge efficiency of the negative electrode, the excess may not be utilized and may be wasted. The charge and discharge efficiency refers to the initial discharge amount compared to the initial charge amount. For example, the charge and discharge efficiency of a graphite negative electrode may be about 88% or about 91.5%, and the charge and discharge efficiency of a positive electrode may be about 95%. In this case, the positive electrode active material may further include the third particles PTC3 to the extent that the charge and discharge efficiency of the positive electrode does not fall lower than (e.g., below) about 88% or about 91.5%. By considering the above range, energy density properties may be improved without loss in lifetime characteristics.

The positive electrode active material according to the present disclosure may have high pellet density (PD). In one or more embodiments, the pellet density of the positive electrode active material of the present disclosure may be about 2 g/cc to about 5 g/cc, about 2.5 g/cc to about 4 g/cc, or about 2.5 g/cc to about 3.0 g/cc. This may be higher than the pellet density of common LFP. High pellet density may contribute to improving the lifetime characteristics and increasing the energy density of a rechargeable lithium battery. Uniform and dense distribution of the active material may help the consistent maintenance of an electrochemical reaction during charging and discharging processes, which may contribute to improving lifetime characteristics. Because more active material (e.g., the positive electrode active material) may be stored in a limited space, and more energy may be stored per unit volume, contributing to the increase in energy density.

A rechargeable lithium battery including the positive electrode active material according to the present disclosure may have a high average voltage. In one or more embodiments, the average voltage of the rechargeable lithium battery of the present disclosure may be about 3 V to about 4 V. In one or more embodiments, the average voltage range of the present disclosure may be about 3.5 V to about 3.7 V, which may be higher than the average voltage of a common LFP. Because the energy density is proportional to an average voltage, the above-described average voltage may contribute to increasing energy density.

The rechargeable lithium battery including the positive electrode active material according to the present disclosure may have high energy density. In one or more embodiments, the energy density of the rechargeable lithium battery of the present disclosure may be about 300 Wh/kg to about 600 Wh/kg, about 400 Wh/kg to about 500 Wh/kg, or about 430 Wh/kg to about 480 Wh/kg.

The rechargeable lithium battery including the positive electrode active material according to the present disclosure may have high lifetime characteristics. In one or more embodiments, the rechargeable lithium battery of the present disclosure may have capacity retention of about 95% or more after 50 charge and discharge cycles under certain current and voltage conditions. In one or more embodiments, if (e.g., when) initially charging under constant current (about 0.2 C) and constant voltage (about 4.25 V) conditions, initially discharging until about 2.5 V under constant current (about 0.2 C) conditions, and then charging and discharging 50 times at about 0.2 C/0.2 C, the capacity retention may be about 95% to about 100%, or about 98% to about 100%, which may be higher than the lifetime characteristics of a common LFP.

Hereinafter, the Examples, Comparative Examples and Reference Examples of the present disclosure is described elsewhere herein. However, the Examples are only illustrations of the present disclosure, and the present disclosure is not limited to the Examples.

**Preparation Example 1-1: Preparation of First Particles with Single Particle Form**

A $Fe_1PO_4$ iron phosphate precursor, lithium carbonate, and titanium dioxide were mixed in a molar ratio of Fe:Li:Ti of about 1:1.03:0.004. To the mixture, 10 wt% of glucose was added. A wet grinding process was performed by a ball milling with respect to the mixture. The mixture was evaporated and dried in a heating furnace tray, and put in a vacuum oven for drying at about 120°C for about 4 hours. The dried mixture was baked under a nitrogen atmosphere at about 750°C for about 10 hours. The baked product was ground to obtain first particles in a single particle form. The average size of the first particles was about 200 nm to about 300 nm.

**Preparation Example 1-2: Preparation of First Particles with Secondary Particle Form**

A $Fe_1PO_4$ iron phosphate precursor, lithium carbonate and titanium dioxide were mixed in a molar ratio of Fe:Li:Ti of about 1:1.03:0.004. To the mixture, 10 wt% of glucose was added based on a total weight (100 wt%) of the mixture. A mixture (e.g., the mixture with the added glucose) as a slurry was evaporated and dried by spray drying with a spray pressure of about 0.5 megapascal (MPa) at temperature conditions of about 230°C. The dried mixture was baked under a nitrogen atmosphere at about 750°C for about 10 hours to obtain first particles in a secondary particle form. The average size of the primary particles in the first particles was about 100 nm to about 200 nm.

In other words, Preparation Example 1-1 describes the process of creating first particles in a single particle form. This involves mixing $Fe_1PO_4$ iron phosphate precursor, lithium carbonate, and titanium dioxide in a specific molar ratio, adding glucose, and performing wet grinding. The mixture is then dried, baked under a nitrogen atmosphere, and ground to produce single particles with an average size of primary particles in the first particles of 200 nm to 300 nm. Preparation Example 1-2 outlines the method for preparing first particles in a secondary particle form. The same initial materials and molar ratios are used, but the mixture is dried by spray drying at specific conditions before baking. This process results in secondary particles with primary particles averaging 100 nm to 200 nm in size.

**Preparation Example 1-3: Preparation of Second Particles**

In 100 mL of distilled water, 0.170 g of $MnSO_4H_2O$, and 0.228 g of $(NH_4)_2S_2O_8$ were dissolved, and sulfuric acid was added thereto to adjust the pH value to 1, followed by reacting at about 130°C for about 10 hours to obtain a solid precipitate. The precipitate thus obtained was washed with distilled water several times and dried at about 300°C for about 3 hours to obtain $MnO_2$ as a solid having an average particle diameter of about 5 $\mu$m.

$Li_2CO_3$ and the $MnO_2$ thus synthesized were mixed so that the molar ratio of Li and Mn became about 1:2, and heated at about 600°C for about 10 hours to synthesize $LiMn_2O_4$ particles having an average particle diameter of about 7 $\mu$m.

**Preparation Example 1-4: Preparation of Third Particles**

Nickel hydroxide of $Ni(OH)_2$ having a purity of about 99.9% and an average particle diameter of about 8-12 $\mu$m was baked under an oxygen atmosphere at about 600°C for about 10 hours to prepare nickel oxide (NiO). The nickel oxide and lithium oxide were mixed so that the molar ratio of Ni:Li was about 1:2.03, and baked under a nitrogen atmosphere at about 650°C for about 18 hours to synthesize lithium-nickel composite oxide ($Li_2NiO_2$:LNO) particles.

**Preparation Example 2-1: Preparation of Main Active Material**

A main active material was prepared by mixing the first particles of Preparation Example 1-1 (single particle form) and the second particles of Preparation Example 1-3 in a weight ratio of about 46:54. In this case, the Mn content (e.g., amount) relative to metal elements excluding lithium in the main active material was about 60 mol% based on a total mole (100 mol%) of the metal elements excluding lithium in the main active material.

**Preparation Example 2-2**

A main active material was prepared by mixing the first particles of Preparation Example 1-1 (single particle form) and the second particles of Preparation Example 1-3 in a weight ratio of about 55:45. In this case, the Mn content (e.g., amount) relative to metal elements excluding lithium in the main active material was about 50 mol% based on the total mole (100 mol%) of the metal elements excluding lithium in the main active material.

**Preparation Example 2-3**

A main active material was prepared by mixing the first particles of Preparation Example 1-2 (secondary particle form) and the second particles of Preparation Example 1-3 in a weight ratio of about 46:54. In this case, the Mn content (e.g., amount) relative to metal elements excluding lithium in the main active material was about 60 mol% based on the total mole (100 mol%) of the metal elements excluding lithium in the main active material.

**Preparation Example 2-4**

A main active material was prepared by mixing the first particles of Preparation Example 1-2 (secondary particle form) and the second particles of Preparation Example 1-3 in a weight ratio of about 55:45. In this case, the Mn content (e.g., amount) relative to metal elements excluding lithium in the main active material was about 50 mol% based on the total mole (100 mol%) of the metal elements excluding lithium in the main active material.

**Comparative Example 1**

An active material was prepared by mixing the first particles in a secondary particle form of Preparation Example 1-2 and the second particles of Preparation Example 1-3 in a weight ratio of about 59:41. In this case, the Mn content (e.g., amount) relative to metal elements excluding lithium in the main active material was about 45 mol% based on the total mole (100 mol%) of the metal elements excluding lithium in the main active material.

**Comparative Example 2**

An active material was prepared by mixing the first particles in a secondary particle form of Preparation Example 1-2 and the second particles of Preparation Example 1-3 in a weight ratio of about 32:68. In this case, the Mn content (e.g., amount) relative to metal elements excluding lithium in the main active material was about 75 mol% based on the total mole (100 mol%) of the metal elements excluding lithium in the main active material.

**Example 1: Preparation of Final Positive Electrode Active Material**

A positive electrode active material was prepared by mixing the main active material of Preparation Example 2-2 and the third particles of Preparation Example 1-4 in a weight ratio of about 98:2. The weight ratio of the first particles (single particles): second particles: third particles was about 54:44:2.

**Example 2**

A positive electrode active material was prepared by mixing the main active material of Preparation Example 2-2 and the third particles of Preparation Example 1-4 in a weight ratio of about 97:3. The weight ratio of the first particles (single particles): second particles: third particles was about 53:44:3.

**Example 3**

A positive electrode active material was prepared by mixing the main active material of Preparation Example 2-4 and the third particles of Preparation Example 1-4 in a weight ratio of about 98:2. The weight ratio of the first particles (secondary particles): second particles: third particles was about 54:44:2.

**Example 4**

A positive electrode active material was prepared by mixing the main active material of Preparation Example 2-4 and the third particles of Preparation Example 1-4 in a weight ratio of about 97:3. The weight ratio of the first particles (secondary particles): second particles: third particles was about 53:44:3.

**Reference Example 1**

A positive electrode active material was prepared by mixing the main active material of Preparation Example 2-2 and the third particles of Preparation Example 1-4 in a weight ratio of about 99:1. The weight ratio of the first particles (single particles): second particles: third particles was about 54:45:1.

**Reference Example 2**

A positive electrode active material was prepared by mixing the main active material of Preparation Example 2-4 and the third particles of Preparation Example 1-4 in a weight ratio of about 99:1. The weight ratio of the first particles (secondary particles): second particles: third particles was about 54:45:1.

**Manufacture of Positive Electrode**

For preparing a total weight (100 wt%) of a positive electrode active material slurry, 95 wt% of the final positive electrode active material, 3 wt% of a polyvinylidene fluoride binder, and 2 wt% of a carbon black conductive material were mixed in an N-methylpyrrolidone solvent to prepare the positive electrode active material slurry. The positive electrode active material slurry was applied on an aluminium current collector, dried, and rolled to manufacture a positive electrode.

**Manufacture of Negative Electrode**

A Si-graphite composite, a binder, and a conductive material were mixed in an N-methylpyrrolidone solvent to prepare a negative electrode active material slurry. The negative electrode active material slurry was applied on a copper current collector, dried, and rolled to manufacture a negative electrode.

**Fabrication of Rechargeable Lithium Battery**

A 2032 type (kind) coin half-cell was formed utilizing the positive electrode prepared and a lithium metal electrode as the counter electrode. A separator (thickness: about 16 $\mu$m) including (e.g., composed of) a porous polyethylene (PE) film was arranged between the positive electrode and the lithium metal counter electrode, and an electrolyte solution was injected to fabricate a rechargeable lithium battery. As the electrolyte, an electrolyte solution obtained by mixing 1.3 M LiPF$_6$ with a mixture solvent of ethylene carbonate (EC), ethylmethyl carbonate (EMC) and dimethyl carbonate (DMC) in a volume ratio of about 3:4:3 was utilized.

**Evaluation Example 1: Analysis on the Surface of Positive Electrode Active Material**

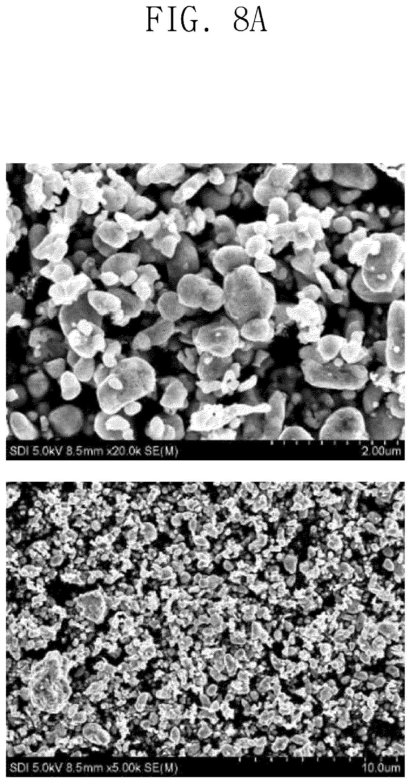

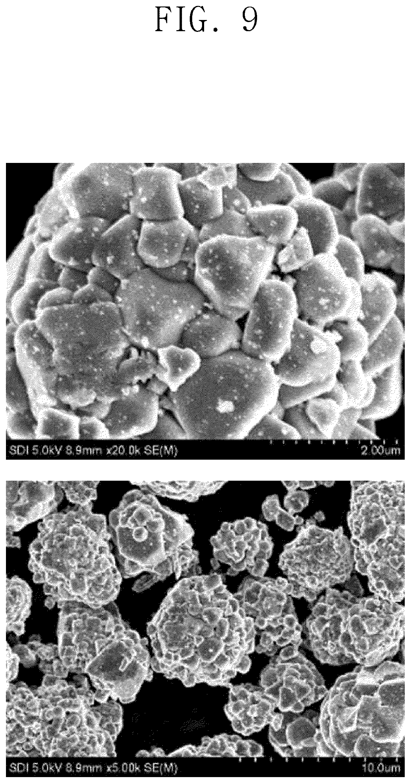

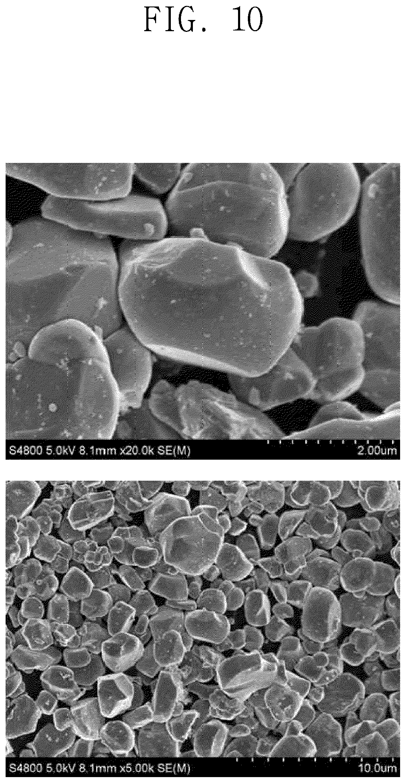

The scanning electron microscope (SEM) images of the first particles (single particle form) prepared in Preparation Examples 1-1 are shown in FIG. 8A. The SEM images of the first particles (secondary particle form) prepared in Preparation Example 1-2 are shown in FIG. 8B. The SEM images of the second particles prepared in Preparation Example 1-3 are shown in FIG. 9. The SEM images of the third particles prepared in Preparation Example 1-4 are shown in FIG. 10.

Referring to FIG. 8A, it may be confirmed that the first particles according to Preparation Example 1-1 of the present disclosure have a fine single particle form with a nanometer size. Referring to FIG. 8B, it may be confirmed that the first particles according to Preparation Example 1-2 of the present disclosure have a spherical secondary particle form in which primary particles are agglomerated. In addition, it may be confirmed that the primary particles of Preparation Example 1-2 have a smaller size and more substantially uniform compared to the primary particles of Preparation Example 1-1.

Referring to FIG. 9, it may be confirmed that the second particles according to Preparation Example 1-3 of the present disclosure have a secondary particle form in which primary particles are agglomerated.

Referring to FIG. 10, it may be confirmed that the third particles according to Preparation Example 1-4 of the present disclosure have a single particle form.

**Evaluation Example 2: Active Material Evaluation of Main Active Material and Battery Evaluation**

The average pellet density (PD) of the main active materials of Preparation Examples 2-3 and 2-4, and the properties of rechargeable lithium batteries fabricated utilizing the main active materials were evaluated. The average pellet density (PD) of the positive electrode active materials of Comparative Examples 1 and 2, and the properties of rechargeable lithium batteries fabricated utilizing the positive electrode active materials were evaluated. Because the evaluation was conducted to observe changes in properties depending on the Mn content (e.g., amount) in the main active material, it was conducted without including the third particles PTC3.

Rechargeable lithium batteries were initially charged under constant current (about 0.2 C) and constant voltage (about 4.25 V) conditions, and after resting for about 10 minutes, discharged under constant current (about 0.2 C) conditions until about 2.5 V to carry out initial charging and discharging. Then, charging and discharging were repeated 50 times with about 0.2 C/0.2 C. The evaluation results of the battery properties are shown in Table 1. The Mn content (e.g., amount) refers to the content (e.g., amount) of Mn relative to metal elements excluding lithium in the main active material.

Table 1

| | Mixing ratio (weight ratio) | | Mn content (e.g., amount) (mol %) | 0.2 C Charge amount (mAh /g) | 0.2 C Discharge amount (mAh/ g) | 0.2 C Efficiency (%) | Average voltage (V) | Lifetime (%, 50cy) | Energy density (Wh/kg ) | PD (g/cc) |
| | First particles (secondary particles) | Second particles | | | | | | | | |
| Comparative Example 2 | 32 | 68 | 75 | 125.1 | 122.3 | 98.0 | 3.70 | 98.0 | 425 | 2.62 |
| Preparation Example 2-3 | 46 | 54 | 60 | 133.7 | 130.7 | 97.7 | 3.61 | 98.1 | 442 | 2.59 |
| Preparation Example 2-4 | 55 | 45 | 50 | 139.2 | 135.9 | 97.7 | 3.54 | 98.3 | 451 | 2.57 |
| Comparative Example 1 | 59 | 41 | 45 | 141.6 | 138.3 | 97.7 | 3.51 | 97.5 | 454 | 2.55 |

Referring to Table 1, it may be confirmed that the batteries according to Preparation Examples 2-3 and 2-4 have substantially the same efficiency as the batteries according to Comparative Examples 1 and 2. It may be confirmed that the batteries according to Preparation Examples 2-3 and 2-4 have higher average voltage and higher energy density compared to the battery according to Comparative Example 1. It may be confirmed that the batteries according to Preparation Examples 2-3 and 2-4 have better lifetime characteristics and higher pellet density compared to the battery according to Comparative Example 2. For example, it may be confirmed that, if (e.g., when) the Mn content (e.g., an amount of Mn) relative to metal elements excluding lithium in the main active material is about 50 mol% to about 70 mol% based on the total weight (100 wt%) of the metal elements excluding lithium in the main active material, the decrease of efficiency and average voltage may be minimized or reduced, while achieving excellent or suitable lifetime and excellent or suitable energy density properties.

**Evaluation Example 3: Evaluation of Active Material**

The average pellet density (PD) of the positive electrode active materials of Examples 1 to 4 and Reference Examples 1 and 2 were measured, and the results are shown in Table 2. The average pellet density was measured by putting 3 g of a positive electrode active material in a pellet mold and applying a force of about 4.0 US tons for about 30 second.

Table 2

| | Mixing weight ratio (%) | | | | PD (g/cc) |
|---|---|---|---|---|---|
| | First particles | | Second particles | Third particles | |
| | Single particles | Secondary particles | | | |
| Reference Example 1 | 54 | 0 | 45 | 1 | 2.60 |
| Example 1 | 54 | 0 | 44 | 2 | 2.61 |
| Example 2 | 53 | 0 | 44 | 3 | 2.58 |
| Reference Example 2 | 0 | 54 | 45 | 1 | 2.61 |
| Example 3 | 0 | 54 | 44 | 2 | 2.62 |
| Example 4 | 0 | 53 | 44 | 3 | 2.60 |

Referring to Table 2, it may be confirmed that the batteries according to Examples 1 and 2 of the present disclosure have better or substantially the same average pellet density compared to the battery according to Reference Example 1. In addition, it may be confirmed that the batteries according to Examples 3 and 4 of the present disclosure have better or substantially the same average pellet density compared to the battery according to Reference Example 2.

**Evaluation Example 4: Battery Evaluation II**

The properties of rechargeable lithium batteries fabricated utilizing the positive electrode active materials of Examples 1 to 4 and Reference Examples 1 and 2 were evaluated, and the results are shown in Table 3. The evaluation conditions were the same as in Evaluation Example 2.

Table 3

| | Mixing ratio (weight ratio) | | | | 0.2 C Charge amount (mAh/g) | 0.2 C Discharge amount (mAh/g) | 0.2 C Efficiency (%) | Average voltage (V) | Lifetime (%, 50cy) | Energy density (Wh/kg) |
|---|---|---|---|---|---|---|---|---|---|---|
| | First particles | | Second particles | Third particles | | | | | | |
| | Single particles | Secondary particles | | | | | | | | |
| Reference Example 1 | 54 | 0 | 45 | 1 | 141.0 | 131.5 | 93.3 | 3.54 | 98.6 | 457 |
| Example 1 | 54 | 0 | 44 | 2 | 144.2 | 130.1 | 90.2 | 3.54 | 98.7 | 461 |
| Example 2 | 53 | 0 | 44 | 3 | 147.1 | 130.1 | 88.4 | 3.54 | 98.5 | 461 |
| Reference Example 2 | 0 | 54 | 45 | 1 | 142.5 | 134.8 | 94.6 | 3.54 | 98.7 | 462 |
| Example 3 | 0 | 54 | 44 | 2 | 144.9 | 134.1 | 92.5 | 3.54 | 98.8 | 469 |
| Example 4 | 0 | 53 | 44 | 3 | 148.1 | 133.1 | 89.9 | 3.54 | 98.7 | 471 |

Referring to Table 3, it may be confirmed that the batteries according to Examples 1 and 2 have better or substantially the same lifetime and better energy density compared to the battery according to Reference Example 1. In addition, it may be confirmed that the batteries according to Examples 3 and 4 have better or the same lifetime and better energy density compared to the battery according to Reference Example 2. Further, it may be confirmed that the batteries according to Examples 3 and 4 have higher charge and discharge amounts, efficiency, lifetime and energy density compared to the batteries according to Examples 1 and 2. For example, it may be confirmed that better results were achieved if (e.g., when) the first particles PTC1 included in the positive electrode active material have a secondary particle form compared to the first particles PTC1 having a single particle form.

A positive electrode active material according to the present disclosure may exhibit improved economic feasibility, structural stability and lifetime characteristics by including olivine-based first particles.

A positive electrode active material according to the present disclosure may exhibit improved average voltage by including spinel-based second particles.

A positive electrode active material according to the present disclosure may exhibit improved capacity and energy density by including a small amount of third particles that function as a sacrificial positive electrode.

A positive electrode active material according to the present disclosure may have improved energy density and lifetime characteristics while securing economic feasibility by mixing the first particles, second particles and third particles in an appropriate or suitable ratio.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery manufacturing device, a management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the present disclosure have been described, it is understood that the present disclosure should not be limited to these embodiments but one or more suitable changes and modifications may be made by one ordinary skilled in the art within the scope of the present disclosure as hereinafter claimed and equivalents thereof.

Certain embodiments are set out in the following clauses:

Clause 1. A positive electrode for a rechargeable lithium battery, the positive electrode comprising: a positive electrode current collector; and a positive electrode active material layer on the positive electrode current collector, wherein the positive electrode active material layer comprises a positive electrode active material as hereinbefore described and/or as claimed in any of the accompanying claims, a conductive material, and a binder.

Clause 2. The positive electrode for a rechargeable lithium battery of Clause 1, wherein the binder content is about 0.5 parts by weight to about 5 parts by weight based on about 100 parts by weight of the positive electrode active material layer.

Clause 3. The positive electrode for a rechargeable lithium battery of Clause 1 or Clause 2, wherein the binder comprises at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon.

Clause 4. The positive electrode for a rechargeable lithium battery of any preceding Clause, wherein the conductive material content is about 0.5 parts by weight to about 5 parts by weight based on about 100 parts by weight of the positive electrode active material layer.

Clause 5. The positive electrode for a rechargeable lithium battery of any preceding Clause, wherein the conductive material comprises a carbon-based material, a metal-based material having a metal powder or metal fiber form, a conductive polymer, or a mixture thereof.

**Claims**

1. A positive electrode active material, comprising:

   first particles comprising a compound represented by Chemical Formula 1 and having an olivine structure; second particles comprising a compound represented by Chemical Formula 2 and having a spinel structure; and third particles comprising a compound represented by Chemical Formula 3 and having a layered structure, wherein the first particles and the second particles constitute a main active material of the positive electrode active material, with a content of about 95 parts by weight to about 99.5 parts by weight based on about 100 parts by weight of the positive electrode active material, and the third particles constitute about 0.5 parts by weight to about 5 parts by weight based on about 100 parts by weight of the positive electrode active material:

   $$\text{Chemical Formula 1} \qquad Li_{a1}Fe_{x1}B_{y1}PO_{4-b1},$$

   in Chemical Formula 1, $0.8 \leq a1 \leq 1.2$, $0.95 \leq x1 \leq 1.0$, $0 \leq y1 \leq 0.05$, $0 \leq b1 \leq 0.05$, $x1 + y1 = 1$, and B is at least one element selected from the group consisting of Al, Ti, V and Mg,

   $$\text{Chemical Formula 2} \qquad Li_{a2}Mnx_2Cy_2O_{4-b2},$$

   in Chemical Formula 2, $0.8 \leq a2 \leq 1.2$, $1.9 \leq x2 \leq 2.05$, $0 \leq y2 \leq 0.05$, $0 \leq b2 \leq 0.05$, and C is at least one element selected from the group consisting of Al and Mg,

   $$\text{Chemical Formula 3} \qquad Li_{a3}Ni_{x3}D_{y3}O_{2-b3},$$

   in Chemical Formula 3, $1.9 < a3 \leq 2.1$, $0.9 \leq x3 \leq 1.05$, $0 \leq y3 \leq 0.05$, $0 \leq b3 \leq 0.05$, and D is at least one element selected from the group consisting of Al and Mg.

2. The positive electrode active material of claim 1, wherein a content of Mn in the main active material is about 50 mol% to about 70 mol% based on about 100 parts by mole of the transition metals excluding lithium in the main active material.

3. The positive electrode active material of claim 1 or claim 2, wherein a mixing ratio of the first particles and the second particles is about 55:45 to about 37:63 based on weight.

4. The positive electrode active material of any preceding claim, wherein the content of the third particles is about 2 parts by weight to about 3 parts by weight based on about 100 parts by weight of the positive electrode active material.

5. The positive electrode active material of any preceding claim, wherein the third particles are to be electrochemically inactive after a first cycle.

6. The positive electrode active material of any preceding claim,

   wherein the first particles have a single particle form,
   the first particle comprises at least one first primary particle,
   a first average particle diameter of the first particles is about 0.5 $\mu$m to about 2.5 $\mu$m, and
   an average size of the first primary particles is about 200 nm to about 300 nm.

7. The positive electrode active material of any preceding claim,

   wherein each of the first particles comprises an agglomeration of a plurality of first primary particles, and
   each of the second particles comprises at least one second primary particle.

8. The positive electrode active material of claim 7,

   wherein a first average particle diameter of the first particles is about 3 $\mu$m to about 10 $\mu$m, and
   an average size of the first primary particles is about 100 nm to about 200 nm.

9. The positive electrode active material of claim 7 or claim 8, wherein an average size of the plurality of first primary particles is smaller than an average size of the second primary particles.

10. The positive electrode active material of any one of claims 7 to 9, wherein an average size of the second primary particles is about 0.5 $\mu$m to about 3 $\mu$m.

11. The positive electrode active material of any preceding claim,

    wherein the first particle comprises a first coating layer comprising carbon, and
    a content of carbon in the first particle is about 1.5 wt% to about 2.5 wt% based on about 100 parts by weight of the first particle.

12. The positive electrode active material of any preceding claim, wherein the third particles have a single particle form.

13. The positive electrode active material of any preceding claim, wherein a porosity of the first particles is about 20% to about 40%.

14. The positive electrode active material of any preceding claim, wherein a span value of the first particles, measured by a particle size analyzer is about 0.3 to about 0.75, the span value being determined by the formula:

$$\left(\frac{D_{90} - D_{10}}{D_{50}}\right).$$

15. A rechargeable lithium battery comprising the positive electrode active material according to any one of claims 1 to 14.

# FIG. 1

ELL

Li$^+$

COL1 AML1        30        COL2 AML2
└──┬──┘                    └──┬──┘
   10                         20

# FIG. 2

FIG. 3

# FIG. 4

EP 4 641 654 A1

# FIG. 5

28

# FIG. 6

# FIG. 7

PTC1    PTC2    PTC3

CDM

BND

FIG. 8A

FIG. 8B

# FIG. 9

# FIG. 10

Europäisches
Patentamt

European
Patent Office

Office européen
des brevets

**EUROPEAN SEARCH REPORT**

Application Number

EP 25 16 9149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 116 525 822 A (SHENZHEN DEFANGCHUANGYU NEW ENERGY TECH CO LTD) 1 August 2023 (2023-08-01) * example 5 * * paragraph [0030] * * paragraph [0055] * * paragraph [0116] - paragraph [0121] * * paragraph [0148] - paragraph [0155] * ----- | 1-7, 9-11,15 | INV. H01M4/131 H01M4/136 H01M4/36 H01M4/505 H01M4/525 H01M4/58 ADD. C01G49/00 C01G53/42 C01G45/1242 H01M4/04 |
| Y | QIU CHENGGUANG ET AL: "Electrochemical Performance of LiMn2O4/LiFePO4 Blend Cathodes for Lithium Ion Batteries", CHEMICAL RESEARCH IN CHINESE UNIVERSITIES., vol. 31, no. 2, 20 March 2015 (2015-03-20) , pages 270-275, XP093279465, CN ISSN: 1005-9040, DOI: 10.1007/s40242-015-4367-0 * abstract * * figure 2 * * page 270, line 15 - line 48 * * page 271, line 22 - line 31 * * page 271, line 61 - line 71 * * page 272, line 9 - line 10 * * page 275, line 35 - line 37 * ----- -/-- | 1-6,11, 15 | |

TECHNICAL FIELDS SEARCHED (IPC)

H01M
C01G

The present search report has been drawn up for all claims

| Place of search | Date of completion of the search | Examiner |
|---|---|---|
| The Hague | 13 June 2025 | Al-Kutubi, Hanan |

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DU YUANCHAO ET AL: "Thermal stability of LiFePO4/C-LiMn2O4 blended cathode materials", SCIENCE CHINA TECHNOLOGICAL SCIENCES, SCIENCE CHINA PRESS, HEIDELBERG, vol. 60, no. 1, 22 November 2016 (2016-11-22), pages 58-64, XP036127404, ISSN: 1674-7321, DOI: 10.1007/S11431-016-0329-7 [retrieved on 2016-11-22] * figure 3 * * page 58, line 37 - line 41 * * page 59, line 18 - line 29 * * page 59, line 37 - line 38 * * page 59, line 60 - line 71 * * page 61, line 65 - line 78 * | 1-5,7, 9-11,15 | |
| A | MAKHONINA E V ET AL: "LiFePO4-LiMn2O4 composite cathode materials for lithium-ion batteries", INORGANIC MATERIALS, PLEIADES PUBLISHING, MOSCOW, vol. 51, no. 12, 22 October 2015 (2015-10-22), pages 1264-1269, XP035572725, ISSN: 0020-1685, DOI: 10.1134/S0020168515110059 [retrieved on 2015-10-22] * abstract * | 1-15 | TECHNICAL FIELDS SEARCHED (IPC) |

The present search report has been drawn up for all claims

| Place of search | Date of completion of the search | Examiner |
|---|---|---|
| The Hague | 13 June 2025 | Al-Kutubi, Hanan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

## ANNEX TO THE EUROPEAN SEARCH REPORT
## ON EUROPEAN PATENT APPLICATION NO.

EP 25 16 9149

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2025

| Patent document cited in search report | Publication date | Patent family member(s) | Publication date |
|---|---|---|---|
| CN 116525822 A | 01-08-2023 | NONE | |

EPO FORM P0459

For more details about this annex : see Official Journal of the European Patent Office, No. 12/82